(19) Europäisches Patentamt
European Patent Office
Office européen des brevets

(11) Publication number: **0 594 264 A2**

(12) # EUROPEAN PATENT APPLICATION

(21) Application number: **93203154.5**

(51) Int. Cl.[5]: **C08F 297/08**

(22) Date of filing: **30.08.89**

This application was filed on 11 - 11 - 1993 as a divisional application to the application mentioned under INID code 60.

(30) Priority: **31.08.88 JP 217299/88**
**13.09.88 JP 229412/88**
**20.09.88 JP 236062/88**
**18.10.88 JP 262062/88**

(43) Date of publication of application:
**27.04.94 Bulletin 94/17**

(60) Publication number of the earlier application in accordance with Art.76 EPC: **0 357 394**

(84) Designated Contracting States:
**DE FR GB NL**

(71) Applicant: **MITSUBISHI PETROCHEMICAL COMPANY LIMITED**
**2-5, Marunouchi 2-chome**
**Chiyoda-ku Tokyo-to(JP)**

(72) Inventor: **Matsuura, Mitsuyuki, c/o Mitsubishi Petrochemical Company Limited,**
**Jushi Kenkyusho,**
**1, Toho-cho**
**Yokkaichi-shi, Mie-ken(JP)**
Inventor: **Fujita, Takashi, c/o Mitsubishi Petrochemical Company Limited,**
**Jushi Kenkyusho,**
**1, Toho-cho**
**Yokkaichi-shi, Mie-ken(JP)**

(74) Representative: **Kyle, Diana**
**Elkington and Fife**
**Prospect House**
**8 Pembroke Road**
**Sevenoaks, Kent TN13 1XR (GB)**

(54) **Process for producing propylene block copolymer.**

(57) Block copolymers of propylene with ethylene is produced by solvent-free, two-step polymerization comprising polymerization of propylene in a first step and subsequent polymerization of propylene with ethylene in a second step. The catalyst and the polymerization conditions or particulars are specified.

EP 0 594 264 A2

This invention relates to a process for producing propylene block copolymers having high rigidity and high impact strength with good flowability under the condition where substantially no solvent is used yet at high activity.

Crystalline polypropylene, while having excellent characteristics of rigidity and heat resistance, had on the other hand the problem of low impact strength, particularly low impact strength at a low temperature.

As the method for improving this point, there have been already known a method of forming a block copolymer by polymerizing stepwise propylene and ethylene or another olefin (Japanese Patent Publications Nos. 11230/1968, 16668/1969, 20621/1969, 24593/1974, 30264/1974, Japanese Laid-open Patent Publications Nos. 25781/1973, 115296/1975, 35789/1978 and 110072/1979).

However, when propylene and ethylene are polymerized in two stages or multiple stages, although impact resistance may be improved, there ensues on the other hand the problem that polymers of low crystallinity are formed in a large amount, because the product contains copolymer portions.

Also, for improvement of impact strength of a block copolymer, it has been generally practiced to increase an amount of a rubbery copolymer formed in the block copolymerization. However, the polymer particles tend to be increased in tackiness with the increase of rubbery copolymers, whereby sticking between polymer particles or sticking of the polymer particles onto the device inner wall may occur, whereby it becomes frequently difficult to perform stable running of a polymer production device for a long term. Particularly, in polymerization without employment of a solvent, for example, gas phase polymerization, worsening of flowability due to sticking of polymer particles is a very great problem in running operation. Accordingly, it has been desired to develop a technique which can improve running stability by preventing sticking of polymer particles, even when an amount of rubbery polymers formed may be increased.

The present inventors have studied intensively in order to solve the problems as mentioned above, and consequently found that the above problems can be solved by use of a specific catalyst whereby the present invention has been obtained.

More specifically, the process for producing a propylene block copolymer, in its broadest aspect, comprises practicing the polymerization step (a) shown below in the presence of a catalyst comprising a combination of catalyst components (A) and (B) shown below substantially in the absence of a solvent and practicing the polymerization step (2) shown below by continuing the polymerization in the additional presence of the catalyst component (C) shown below in an amount of 0 to 40 in terms of molar ratio relative to titanium in the component (A), thereby producing a propylene block copolymer with a content of a rubbery product of 20 to 70% by weight, the rubbery product being xylene solubles at 20°C:

Catalyst

Component (A):

A solid catalyst component obtained by contacting the following components (i) to (v):

component (i): a solid component comprising titanium, magnesium and halogen as the essential components;

component (ii): a silicon compound represented by the formula: $R^1_mX_nSi(OR^2)_{4-m-n}$ wherein $R^1$ and $R^2$ are each hydrocarbyl groups, X is a halogen atom, m and n are respectively numbers satisfying equations $0 \leqq m \leqq 3$ and $0 \leqq n \leqq 3$, and yet $0 \leqq (m + n) \leqq 3$;

component (iii): a titanium compound represented by the formula: $Ti(OR^3)_{4-a}X_a$ wherein $R^3$ is a hydrocarbyl group, X is a halogen atom, and a is a number satisfying an equation $0 < a \leqq 4$ or the formula: $Ti(OR')_{3-b}X_b$ wherein R' is a hydrocarbyl group, X is a halogen atom, and b is a number satisfying an equation $0 < b \leqq 3$ and/or a silicon compound represented by the formula: $R^4{}_pSiX_{4-p}$ wherein $R^4$ is hydrogen or a hydrocarbyl group, X is a halogen atom and p is a number satisfying an equation $0 \leqq p < 4$, in an amount of 0 to 100 in terms of atomic ratio relative to the titanium component constituting the component (i);

component (iv): an organometallic compound of the group I to the group III of the Periodic Table; and

component (v): at least one compound selected from styrenes, olefins having 4 to 20 carbon atoms and diene compounds having 4 to 20 carbon atoms in an amount of 0 to 1000 in terms of molar ratio relative to the titanium component constituting the component (i);

Component (B): an organoaluminum compound; and

Component (C): a boron compound having a bond of the formula $B\text{-}OR^5$ wherein $R^5$ is a hydrocarbyl group and/or a silicon compound represented by the formula: $R^5{}_yX_zSi(OR^6)_{4-y-z}$ wherein $R^5$ and $R^6$ are each hydrocarbyl groups, X is a halogen atom, y and z are respectively $0 \leqq y \leqq 3$ and $0 \leqq z \leqq 3$, and yet $0 \leqq (y + z) \leqq 3$;

Polymerization steps:

(1) the step of polymerizing propylene or a propylene/ethylene mixture in one stage or multiple stages to form a propylene homopolymer or a propylene-ethylene copolymer with an ethylene content of no higher than 7% by weight, the amount of a polymer in this step corresponding to 10 to 90% by weight of the total amount of the polymers produced;

(2) the step of polymerizing a propylene/ethylene mixture in one stage or multiple stages to form a rubbery copolymer of propylene in a weight ratio of propylene/ethylene of 90/10 to 10/90, the amount of a polymer in this step corresponding to 90 to 10% by weight of the total amount of the polymers produced.

Polymerization of propylene together with ethylene into a block copolymer substantially without using a solvent with the catalyst according to the present invention results in a propylene block copolymer having high rigidity and high impact strength at high activity, namely, at high yield per catalyst and yet stably.

Also, according to the present invention, even when the weight of rubbery copolymer components may become much (e.g. 60% by weight), tackiness of polymer particles is little, and therefore the trouble in running operation which has been a problem in the prior art can be solved.

Further, by carrying out polymerization with the catalyst of the present invention, the catalyst activity can be high during polymerization of rubbery copolymer components, i.e. during the polymerization step (2) in the present invention. In most catalyst systems known in the art, the catalyst activity will be frequently lowered during polymerization for producing rubbery copolymer components to pose a problem. The catalyst system of the presents invention is free from such problems as mentioned above to be also extremely advantageous in commercial production.

Further, as another advantage when employing the catalyst of thee present invention, good properties of the polymer thereby produced may be mentioned. For example, referring to polymer bulk density, it is 0.45 g/cc or higher in the present invention, and sometimes a value of 0.50 g/cc or even higher may be possible.

Catalyst

The catalyst of the present invention comprises a combination of Specific components (A) and (B), and finally component (C) in a specific amount used. Here, the wording "comprises a combination" does not mean that the components are limited only to those mentioned (namely, A, B and C), but does not exclude co-presence of other components compatible with or suited for the purpose.

Component (A)

The component (A) of the catalyst of the present invention is a solid catalyst component obtained by contacting the components (i) to (v) shown below. Here, the wording "obtained by contacting" does not mean that the components are limited only to those mentioned, namely (i) to (v), and does not exclude co-presence of other components suited for the purpose.

Component (i)

The component (i) is a solid component containing titanium, magnesium and a halogen as the essential components. Here, the wording "containing as the essential components" indicates that it can also contain other elements suited for the purpose than the three components mentioned, that these elements can exist in any desired compound suited for the purpose respectively, and also that these elements can also exist in the form mutually bonded together. Solid components containing titanium, magnesium and halogen are known *per se*. For example, those as disclosed in Japanese Laid-open Patent Publications Nos. 45688/1978, 3894/1979, 31092/1979, 39483/1979, 94591/1979, 118484/1979, 131589/1979, 75411/1980, 90510/1980, 90511/1980, 127405/1980, 147507/1980, 155003/1980, 18609/1981, 70005/1981, 72001/1981, 86905/1981, 90807/1981, 155206/1981, 3803/1982, 34103/1982, 92007/1982, 121003/1982, 5309/1983, 5310/1983, 5311/1983, 8706/1983, 27732/1983, 32604/1983, 32605/1983, 67703/1983, 117206/1983, 127708/1983, 183708/1983, 183709/1983, 149905/1984 and 149906/1984 may be employed.

As the magnesium compound which is the magnesium source to be used in the present invention, magnesium dihalides, dialkoxymagnesiums, alkoxymagnesium halides, magnesium oxyhalides, dialkylmagnesiums, magnesium oxide, magnesium hydroxide, carboxylates of magensium, etc. are exemplified. Among these magnesium compounds, magnesium dihalides, particularly $MgCl_2$, are preferred.

As the titanium compound which is the titanium source, compounds represented by the formula Ti-$(OR^6)_{4-n}X_n$ (wherein $R^6$ is a hydrocarbyl group, preferably having about 1 to 10 carbon atoms, X represents a halogen atom and n is an integer of $0 \leqq n \leqq 4$) and polymers of a titanium tetraalkoxide. Specific examples may include:

titanium tetrahalides such as $TiCl_4$, $TiBr_4$ and the like;

alkoxytitanium halides such as

$Ti(OC_2H_5)Cl_3$,
$Ti(OC_2H_5)_2Cl_2$,
$Ti(OC_2H_5)_3Cl$,
$Ti(O\text{-}iC_3H_7)Cl_3$,
$Ti(O\text{-}nC_4H_9)Cl_3$,
$Ti(O\text{-}nC_4H_9)_2Cl_2$,
$Ti(OC_2H_5)Br_3$,
$Ti(OC_2H_5)(OC_4H_9)_2Cl$,
$Ti(O\text{-}nC_4H_9)_3Cl$,
$Ti(O\text{-}C_6H_5)Cl_3$,
$Ti(O\text{-}iC_4H_9)_2Cl_2$,
$Ti(OC_5H_{11})Cl_3$,
$Ti(OC_6H_{13})Cl3$, and the like;

and titanium tetraalkoxides such as

$Ti(OC_2H_5)_4$,
$Ti(O\text{-}iC_3H_7)_4$,
$Ti(O\text{-}nC_3H_7)_4$,
$Ti(O\text{-}nC_4H_9)_4$,
$Ti(O\text{-}iC_4H_9)_4$,
$Ti(O\text{-}nC_5H_{11})_4$,
$Ti(O\text{-}nC_6H_{13})_4$,
$Ti(O\text{-}nC_7H_{15})_4$,
$Ti(O\text{-}nC_8H_{17})_4$,
$Ti[OCH_2CH(CH_3)_2]_4$,
$Ti[OCH_2CH(C_2H_5)C_4H_9]_4$, and the like.

Among them, preferable are $Ti(OC_2H_5)_4$, and $Ti(O\text{-}nC_4H_9)_4$.

Polymers of a titanium tetraalkoxide may include those represented by the following formula:

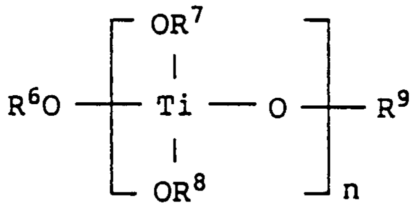

Here, $R^6$ - $R^9$ represent the same or different hydrocarbyl groups, preferably aliphatic hydrocarbyl group having 1 to 10 carbon atoms or aromatic hydrocarbyl groups, particularly aliphatic hydrocarbyl groups having 2 to 6 carbon atoms. n represents a number of 2 or more, particularly a number up to 20. The value of n should be desirably selected so that the polytitanate itself or as a solution can be provided in a liquid state for the contact step with other components. A suitable n selected in view of ease of handling may be about 2 to 14, preferably 2 to 10. Specific examples of such polytitanates may include n-butylpolytitanate (n = 2 to 10), hexylpolytitanate (n = 2 to 10), n-octylpolytitanate (n = 2 to 10), and the like. Among them, n-butylpolytitanate is preferred.

It is also possible to use, as the titanium compound for the titanium source, a molecular compound obtained by reacting an electron donor as described below with a compound $TiX'_4$ (where X' represents a halogen). Specific examples may include:

$TiCl_4 \cdot CH_3COC_2H_5$,
$TiCl_4 \cdot CH_3CO_2C_2H_5$,
$TiCl_4 \cdot C_6H_5NO_2$,
$TiCl_4 \cdot CH_3COCl$,
$TiCl_4 \cdot C_6H_5COCl$,

$TiCl_4 \cdot C_6H_5CO_2C_2H_5$,
$TiCl_4 \cdot ClCOC_2H_5$,
$TiCl_4 \cdot C_4H_4O$, and the like.

It is also possible to use, as the titanium compound for the titanium source, a titanocene compound, for example dicyclopentadienyldichloro titanium, dicyclopentadienyldimethyl titanium, bisindenyldichlorotitanium, and the like.

Among these titanium compounds, preferable are $TiCl_4$, $Ti(OEt)_4$, $Ti(OBu)_4$, and $Ti(OBu)Cl_3$.

As to the halogen source, it is a common practice to supply the halogen from the halide compounds of magnesium and/or titanium as described above, but it can be also supplied from non halogenating agents such as halogen compounds of aluminum, halogen compounds of silicon, halogen compounds of phosphorus, and the like.

The halogen contained in the catalyst components may be fluorine, chlorine, bromine, iodine or a mixture of these, particularly preferably chlorine.

The solid component to be used in the present invention can also include, in addition to the above essential components: a silicon compound such as $SiCl_4$, $CH_3SiCl_3$, and the like; a polymeric silicon compound having the structure represented by the following formula:

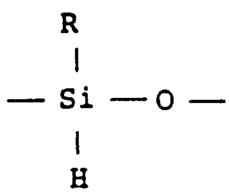

(wherein R is a hydrocarbyl group having about 1 to 10, particularly about 1 to 6 carbon atoms) and having a viscosity of about 10 centistokes to 100 centistokes, such as methylhydropolysiloxane, ethylhydropolysiloxane, phenylhydropolysiloxane, cyclohexylhydropolysiloxane, 1,1,3,3-tetramethyldisiloxane, 1,3,5,7-tetramethylcyclotetrasiloxane, 1,3,5,7,9-pentamethylcyclopentasiloxane and the like; an aluminum compound such as $Al(OiC_3H_7)_3$, $AlCl_3$, $AlBr_3$, $Al(OC_2H_5)_3$, $Al(OCH_3)_2Cl$; and a boron compound such as $B(OCH_3)_3$, $B(OC_2H_5)_3$, $B(OC_6H_5)_3$.

These optional compounds may remain in the solid component as the components of silicon, aluminum and boron.

Further, in preparing the solid component, use can also be made of an electron donor as what is called "an inside donor".

Examples of the electron donor or the inside donor which can be used for preparation of the solid component may include oxygen-containing electron donors such as alcohols, phenols, ketones, aldehydes, carboxylic acids, esters of an organic acid or an inorganic acid, ethers, acid amides, acid anhydrides, and the like; and nitrogen-containing electron donors such as ammonia, amines, nitriles, isocyanates, and the like.

More specifically, there may be included: (a) alcohols having 1 to 18 carbon atoms, such as methanol, ethanol, propanol, pentanol, hexanol, octanol, dodecanol, octadecyl alcohol, benzyl alcohol, phenylethyl alcohol, cumyl alcohol, isopropylbenzyl alcohol and the like; (b) phenols having 6 to 25 carbon atoms which may or may not have an alkyl group, such as phenol, cresol, xylenol, ethylphenol, propylphenol, cumylphenol, nonylphenol, naphthol and the like; (c) ketones having 3 to 15 carbon atoms, such as acetone, methyl ethyl ketone, methyl isobutyl ketone, acetophenone, benzophenone and the like; (d) aldehydes having 2 to 15 carbon atoms, such as acetaldehyde, propionaldehyde, octylaldehyde, benzaldehyde, tolualdehyde, naphthaldehyde and the like; (e) organic acid esters having 2 to 20 carbon atoms, such as methyl formate, methyl acetate, ethyl acetate, vinyl acetate, propyl acetate, octyl acetate, cyclohexyl acetate, ethyl propionate, methyl butyrate, ethyl valerate, ethyl stearate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, diethyl phthalate, dibutyl phthalate, diheptyl phthalate, γ-butyrolactone, α-valerolactone, coumarine, phthalide, ethylene carbonate, cellosolve acetate, cellosolve isobutyrate and cellosolve benzoate, etc.; (f) inorganic acid esters, such as silicates such as ethyl silicate, butyl silicate, phenyltriethoxysilane, etc.; (g) acid halides having 2 to 15 carbon atoms, such as acetyl chloride, benzoyl chloride, toluyloic chloride, anisic chloride, phthaloyl chloride, phthaloyl isochloride and the like; (h) ethers having 2

to 20 carbon atoms, such as methyl ether, ethyl ether, isopropyl ether, butyl ether, amyl ether, tetrahydrofuran, anisole, diphenyl ether and the like; (i) acid amides, such as acetic amide, benzoic amide, toluyloic amide and the like; (j) amines, such as monomethylamine, monoethylamine, diethylamine, tributylamine, piperidine, tribenzylamine, aniline, pyridine, picoline, tetramethylethylenediamine and the like; and (k) nitriles, such as acetonitrile, benzonitrile, tolunitrile and the like. One or more of these electron donors can be used in preparing the solid catalyst component. Among them, preferred are organic acid esters and acid halides, particularly preferably phthalic acid esters, phthalic acid halides and cellosolve acetate.

The amounts of the above respective components used may be at any desired level, so long as the advantages inherent in the present invention can be attained, but, generally speaking, the following ranges are preferred.

The amount of the titanium compound used may be within the range of $1 \times 10^{-4}$ to 1000, preferably 0.01 to 10, in terms of molar ratio relative to the amount of the magnesium compound used. When a compound as the halogen source is used, its amount used may be within the range of $1 \times 10^{-2}$ to 1000, preferably 0.1 to 100, in terms of a molar ratio relative to magnesium used, irrespectively of whether the titanium compound and/or the magnesium compound may contain a halogen or not.

The amount of the silicon, aluminum or boron compound used may be within the range of $1 \times 10^{-3}$ to 100, preferably 0.01 to 10, in terms of a molar ratio to the amount of the above magnesium compound used.

The amount of the electron donor compound used may be within the range of $1 \times 10^{-3}$ to 10, preferably 0.01 to 5, in terms of a molar ratio relative to the amount of the above magnesium compound used.

The solid component for preparing the component (i) may be prepared from the titanium source, the magnesium source and the halogen source, and further optionally other components such as an electron donor according to methods mentioned below.

(a) A method in which a magnesium halide optionally together with an electron donor is contacted with a titanium compound.

(b) A method in which alumina or magnesia is treated with a phosphorus halide compound, and the product is contacted with a magnesium halide, an electron donor, a titanium halide-containing compound.

(c) A method in which the solid component obtained by contacting a magnesium halide with a titanium tetraalkoxide and a specific polymeric silicon compound is contacted with a titanium halide compound and/or a silicon halide compound.

As the polymeric silicon compound, those represented by the following formula are suitable:

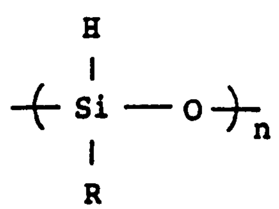

wherein R is a hydrocarbyl group having about 1 to 10 carbon atoms, n is a polymerization degree such that the viscosity of the polymeric silicon compound may be 1 to 100 centistokes.

Among them, methylhydrogen polysiloxane, 1,3,5,7-tetramethylcyclotetrasiloxane, 1,3,5,7,9-pentamethylcyclopentacycloxane, ethylhydrogen polysiloxane, phenylhydrogen polysiloxane, and cyclohexylhydrogen polysiloxane are preferred.

(d) A method in which a magnesium compound is dissolved in a titanium tetraalkoxide and an electron donor, and the solid component precipitated from the solution upon addition thereto of a halogenating agent or a titanium halide compound is contacted with a titanium compound.

(e) A method in which an organomagnesium compound such as Grignard reagent, etc. is reacted with a halogenating agent, a reducing agent, etc., and then the reaction product is contacted with an electron donor and a titanium compound.

(f) A method in which an alkoxy magnesium compound is contacted with a halogenating agent and/or a titanium compound in the presence or absence of an electron donor.

(g) A method in which a magnesium dihalide and a titanium tetraalkoxide and/or a polymer thereof are contacted, and subsequently contacted with a polymeric silicon compound is contacted.

Contact of the three components can be also effected in the presence of a dispersing medium. As the dispersing medium in that case, hydrocarbons, halogenated hydrocarbons, dialkylsiloxanes, etc. may be exemplified. Examples of hydrocarbons may include hexane, heptane, toluene, cyclohexane and the like; examples of halogenated hydrocarbons include n-butyl chloride, 1,2-dichloroethylene, carbon tetrachloride, chlorobenzene, etc.; and examples of dialkylpolysiloxane include dimethylpolysiloxane, methylphenylpolysiloxane and the like.

According to the above preferable embodiments for preparing the solid component (i) wherein two types of contacts are practiced, it is general that dissolution of the magnesium dihalide takes place at the former contact, and precipitation of the solid containing the magnesium dihalide takes place at the latter contact. The precipitated solid should be desirably washed with a solvent compound as described above before use for the further step wherein it is contacted with the component (ii) and others.

Component (ii)

The component (ii) to be used for preparation of the component (A) is a silicon compound represented by the formula: $R^1_mX_nSi(OR^2)_{4-m-n}$ (wherein $R^1$ and $R^2$ are each hydrocarbyl groups, X is a halogen atom, m and n are respectively $0 \leqq m \leqq 3$ and $0 \leqq n \leqq 3$, and yet $0 \leqq (m + n) \leqq 3$). $R^1$ and $R^2$ should be preferably hydrocarbyl groups having about 1 to 20 carbon atoms, preferably 1 to 10 carbon atoms). When there are a plurality of $R^1$ (i.e. m = 2 or 3), the respective $R^1$'s may be either the same or different. X is preferably chlorine, at least from economy.

Specific examples may include:

$(CH_3)Si(OCH_3)_3$,
$(CH_3)Si(OC_2H_5)_3$,
$(C_2H_5)_2Si(OCH_3)_2$,
$(n\text{-}C_6H_{11})Si(OCH_3)_3$,
$(C_2H_5)Si(OC_2H_5)_3$,
$(n\text{-}C_{10}H_{21})Si(OC_2H_5)_3$,
$(CH_2=CH)Si(OCH_3)_3$,
$Cl(CH_2)_3Si(OCH_3)_3$,
$Si(OCH_3)_4$,
$Si(OC_2H_5)_3Cl$,
$(C_2H_5)_2Si(OC_2H_5)_2$,
$(C_{17}H_{35})Si(OCH_3)_3$,
$Si(OC_2H_5)_4$,
$(C_6H_5)Si(OCH_3)_3$,
$Si(OCH_3)_2Cl_2$,
$(C_6H_5)_2Si(OCH_3)_2$,
$(C_6H_5)(CH_3)Si(OCH_3)_2$,
$(C_6H_5)Si(OC_2H_5)_3$,
$(C_6H_5)_2Si(OC_2H_5)_2$,
$NC(CH_2)_2Si(OC_2H_5)_3$,
$(C_6H_5)(CH_3)Si(OC_2H_5)_2$,
$(n\text{-}C_3H_7)Si(OC_2H_5)_3$,
$(CH_3)Si(OC_3H_7)_3$,
$(C_6H_5)(CH_2)Si(OC_2H_5)_3$,

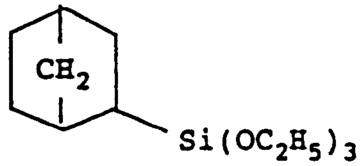,

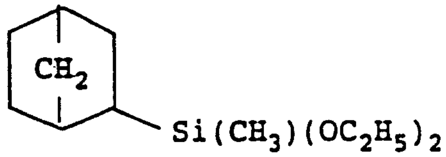,

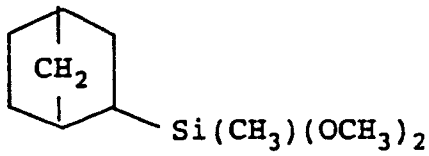,

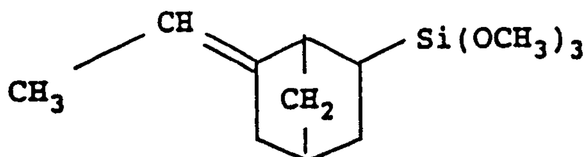,

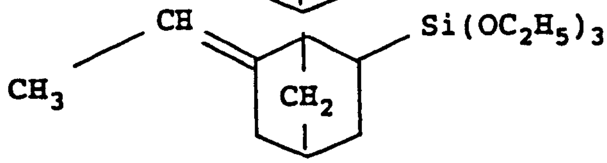,

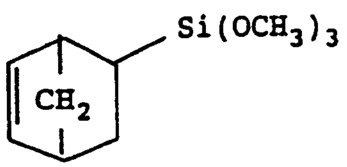,

$(CH_3)_3CSi(CH_3)(OCH_3)_2$,
$(CH_3)_3CSi(HC(CH_3)_2)(OCH_3)_2$,
$(CH_3)_3CSi(CH_3)(OC_2H_5)_2$,
$(C_2H_5)_3CSi(CH_3)(OCH_3)_2$,
$(CH_3)(C_2H_5)CH\text{-}Si(CH_3)(OCH_3)_2$,
$((CH_3)_2CHCH_2)_2Si(OCH_3)_2$,
$(C_2H_5)(CH_3)_2CSi(CH_3)(OCH_3)_2$,
$(C_2H_5)(CH_3)_2CSi(CH_3)(OC_2H_5)_2$,
$(CH_3)_3CSi(OCH_3)_3$,
$(CH_3)_3CSi(OC_2H_5)_3$,
$(C_2H_5)_3CSi(OC_2H_5)_3$,
$(CH_3)(C_2H_5)CHSi(OCH_3)_3$,
$(C_2H_5)(CH_3)_2CSi(OCH_3)_3$,
$(C_2H_5)(CH_3)_2CSi(OC_2H_5)_3$.

Among them, preferred are silicon compounds having a hydrocarbyl group such that the carbon at the $\alpha$-position of $R^1$ is secondary or tertiary and the hydrocarbyl group is a branched hydrocarbyl group having 3 to 20 carbon atoms, preferably a hydrocarbyl group such that the carbon at the $\alpha$-position of $R^1$ is tertiary and the hydrocarbyl group is a branched hydrocarbyl group having 4 to 10 carbon atoms.

Component (iii)

The component (iii) to be used as an optional component for preparation of the component (A) may include titanium compounds and/or silicon compounds. When the component (iii) is used, the resultant

catalyst activity will be increased.

As the titanium compound, the compounds represented by the formula $Ti(OR^3)_{4-a}X_a$ (wherein $R^3$ is a hydrocarbyl group having preferably 1 to 10 carbon atoms, X is a halogen atom and a is $0 < a \leqq 4$) and the formula $Ti(OR')_{3-b}X_b$ (wherein R' is a hydrocarbyl group, having preferably 1 to 10 carbon atoms, X is a halogen atom, and b is $0 < b \leqq 3$) may be included.

Specific examples may include:

$TiCl_4$, $TiBr_4$,
$Ti(OC_2H_5)Cl_3$,
$Ti(OC_2H_5)_2Cl_2$,
$Ti(OC_2H_5)_3Cl$,
$Ti(O\text{-}iC_3H_7)Cl_3$,
$Ti(O\text{-}nC_4H_9)Cl_3$,
$Ti(O\text{-}nC_4H_9)_2Cl_2$,
$Ti(OC_2H_5)Br_3$,
$Ti(OC_2H_5)(OC_4H_9)_2Cl$,
$Ti(O\text{-}nC_4H_9)_3Cl$,
$Ti(O\text{-}C_6H_5)Cl_3$,
$Ti(O\text{-}iC_4H_9)_2Cl_2$,
$Ti(OC_5H_{11})Cl_3$,
$Ti(OC_6H_{13})Cl_3$, $TiCl_3$, $TiBr_3$, $Ti(O\text{-}nC_4H_9)Cl_2$, and the like. Among them, preferable are $TiCl_4$, $Ti(OC_2H_5)Cl_3$, $Ti(OC_4H_9)Cl_3$, $TiCl_3$ and the like.

As the silicon compounds, compounds of the formula: $R^4{}_pSiX_{4-p}$ (wherein $R^4$ is hydrogen atom or a hydrocarbyl group, preferably hating about 1 to 10 carbon atoms, X is a halogen atom, and p is a number of $0 \leqq p < 4$) may be included.

Specific examples may include:

$SiCl_4$,
$CH_3SiCl_3$,
$HSiCl_3$,
$CH_3HSiCl_2$,
$CH_2=CHSiCl_3$,
$CH_3CHClSiCl_3$,
$C_2H_5SiCl_3$,
$(CH_3)_2SiCl_2$,
$HSi(CH_3)_2Cl$,
$C_3H_7SiCl_3$,
$CH_3(C_2H_5)SiCl_2$,
$SiBr_4$,
$(CH_3)_3SiCl$,
$CH_3(CH_2)_3SiCl_3$,
$(C_2H_5)_2SiCl_2$,
$CH_3(CH_2)_4SiCl_3$,
$CH_3(CH_2)_3(CH_3)SiCl_2$,
$(C_6H_5)SiCl_3$,
$(C_6H_5)HSiCl_2$,
(cyclo $C_6H_{11}$)$SiCl_3$,
$(CH_2=CHCH)_2SiCl_2$,
$CH_3(CH_2)_5SiCl_3$,
$C_6H_5CH_2SiCl_3$,
$(C_6H_5)(CH_3)SiCl_2$,

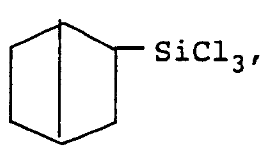

$CH_3(CH_2)_6SiCl_3$,
$CH_3(CH_2)_5(CH_3)SiCl_2$,

$(CH_3)(CH_2)_7SiCl_3$,
$CH_3(CH_2)_6(CH_3)SiCl_2$,
$(CH_3CH_2CH_2)_3SiCl$,
$CH_3(CH_2)_9SiCl_3$,
$CH_3(CH_2)_9(CH_3)SiCl_2$,
$(C_6H_5)_2SiCl_2$, and the like.

Among them, preferable are $SiCl_4$, $(CH_3)SiCl_3$,$(C_2H_5)SiCl_3$, and the like.

Component (iv)

The component (iv) to be used for preparation the component (A) is an organometallic compound of the group I to the group III of the Periodic Table. Among them are preferred organoaluminum compounds. Specific examples may include:
$Al(C_2H_5)_3$,
$Al(iC_4H_9)_3$,
$Al(nC_4H_9)_3$,
$Al(C_5H_{13})_3$,
$Al(C_8H_{17})_3$,
$Al(C_{10}H_{21})_3$,
$Al(C_2H_5)Cl$,
$Al(iC_4H_9)_2Cl$,
$Al(C_2H_5)_2H$,
$Al(iC_4H_9)_2H$,
$Al(C_2H_5)_2(OC_2H_5)$,
$Al(n\text{-}C_6H_{13})_3$,
methylalmoxanes, organolithium compounds such as $LiCH_3$,
$Li\text{-}nC_4H_9$,
$Li\text{-}tC_4H_9$ and the like; organozinc compounds such as $Zn(C_2H_5)_2$,
$Zn(n\text{-}C_4H_9)_2$ and the like; organomagnesium compounds such as
$Mg(C_4H_9)2$,
$Mg(C_2H_5)(C_4H_9)$,
$MgBr(C_4H_9)$,and the like.

Among them, preferable are $Al(C_2H_5)_3$, $Al(iC_4H_9)_3$, $Al(C_8H_{17})_3$, $Zn(C_2H_5)_2$, and $Mg(C_2H_5)(C_4H_9)$, and the like.

Component (v)

The component (v) to be used as an optional component for preparation of the component (A) is at least one member selected from styrenes, olefins having 4 to 20 carbon atoms and diene compounds having 4 to 20 carbonatoms. When the component (V) is used, the resultant product polymer will have improved powder characteristics in such as bulk density, flowing speed which will be explained hereinbelow, and the like.

Specific examples of styrenes may include styrene, and α-methyl-styrene.

Specific examples of olefins having 4 to 20 carbon atoms, preferably 4 to 16 carbon atoms, particularly α-olefins, may include, 1-butene, 2-butene, isobutylene, 1-pentene, 2-pentene, 2-methyl-1-butene, 3-methyl-1-butene, 1-hexene, 2-hexene, 3-hexene, 2-methyl-1-pentene, 3-methyl-1-pentene, 4-methyl-1-pentene, 2-methyl-2-pentene, 3-methyl-2-pentene, 4-methyl-2-pentene, 2-ethyl-1-butene, 2,3-dimethyl-1-butene, 3,3-dimethyl-1-butene, 2,3-dimethyl-2-butene, 1-heptene, 1-octene, 2-octene, 3-octene, 4-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and the like. Among them, particularly preferred are 1-hexene, 1-octene, 1-decene and styrene.

Specific examples of diene compounds having 4 to 20 carbon atoms, preferably 6 to 14 carbon atoms, may include 1,2-butadiene, isoprene, 1,3-hexadiene, 1,4-hexadiene, 1,5-hexadiene, 1,3-pentadiene, 1,4-pentadiene, 2,3-pentadiene, 2,6-octadiene, cis-2-trans-4-hexadiene, trans-2-trans-4-hexadiene, 1,2-heptadiene, 1,4-heptadiene, 1,5-heptadiene, 1,6-heptadiene, 2,4-heptadiene, dicyclopentadiene, 1,3-cyclohexadiene, 1,4-cyclohexadiene, cyclopentadiene, 1,3-methyl-1,4-hexadiene, 5-methyl-1,4-hexadiener 1,9-decadiene, 1,13-tetradecadiene, divinylbenzene and the like.

Among them, preferred are styrene, α-olefins having 4 to 16 carbon atoms and diene compounds having 6 to 14 carbon atoms.

Preparation of the component (A)

The contacting conditions can be as desired, so long as the advantages inherent in the present invention can be attained, but generally the following conditions are preferred. The contact temperature may be about -50 to 200°C, preferably 0 to 100°C. As the contacting method, there may be employed the mechanical method wherein a rotating ball mill, a vibrating ball mill, a jet mill, a medium stirring pulverizer or the like is used and the method in which contact is effected with stirring under the presence of an inert diluent. As the inert diluent to be used, aliphatic or aromatic hydrocarbons and halohydrocarbons, polysiloxane, etc. may be exemplified.

The contacting order of the components (i) to (v) in preparing the component (A) of the present invention may be any desired one, so long as the advantages inherent in the present invention are attained.

Specific orders of such contact may include those as shown below. When either one or both of the components (iii) and (v) is not used, the respective amounts used are to be regarded as zero.

(a) component (i) + component (v) + {component (ii) + component (iii) + component (iv)}
(b) component (i) + {component (iii) + component (iv)} + component (ii) + component (v)
(c) component (i) + component (iii) + {component (ii) + component (v) + component (iv)}
(d) component (i) + component (v) + component (iii) + component (iv) + component (ii)
(e) component (i) + component (iv) + component (iii) + component (v) + component (ii)
(f) component (i) + component (iv) + component (iii) + component (v) + component (ii)
(g) component (i) + {component (ii) + component (iii) + component (iv) + component (v)} + {component (ii) + component (iii) + component (iv) + component (v)}

The quantitative ratio of the components (i) to (v) can be any desired one, so long as the advantages inherent in the present invention can be attained, but generally preferred to be within the following ranges.

The quantitative ratio of the component (i) to (ii) may be within the range of 0.01 to 1000, preferably 0.1 to 100, in terms of the atomic ratio (silicon/titanium) of the silicon of the component (ii) to the titanium component constituting the component (i).

When the component (iii) which is an optional component is to be used, its amount may be within the range of 0 to 100, generally 0.01 to 100, preferably 0.1 to 20, in terms of the atomic ratio of the atomic ratio (titanium and/or silicon (component (iii))/{titanium(component (i))} of the titanium and/or silicon of the component (iii) to the titanium component constituting the component (i).

The amount of the component (iv) used may be within the range of 0.01 to 100, preferably 0.1 to 30, in terms of the atomic ratio (aluminum/titanium) of the aluminum of the component (iv) to the titanium component constituting the component (i).

When the component (v) which is an optional component is to be used, its amount may be within the range of 0 to 100, generally 0.1 to 100, preferably 1 to 20, in terms of molar ratio relative to the titanium component constituting the component (i). The solid component obtained as described above can be used as the catalyst component (A) in the present invention as such, but the solid component produced can be used as the catalyst component (A) after having been further subjected to preliminary polymerization wherein the solid component is contacted with an olefin preferably in the presence of an organoaluminum compound or an organometallic compound such as organozinc compound, etc. before use.

Component (B)

The component (B) is an organoaluminum compound. Specific examples may include those represented by $R^7{}_{3-2}AlX_n$ or $R^8{}_{3-m}Al(OR^9)_m$ (wherein $R^7$ and $R^8$, which may be the same or different, are each hydrocarbyl groups having about 1 to 20 carbon atoms or hydrogen atom, $R^9$ is a hydrocarbyl group, X is a halogen atom, n and m are respectively numbers of $0 \leqq n < 3$, $0 < m < 3$).

Specifically, there may be included (a) trialkylaluminums such as trimethylaluminum, triethylaluminum, triisobutylaluminum, trihexylaluminum, trioctylaluminum, tridecylaluminum, and the like; (b) alkylaluminum halides such as diethylaluminum monochloride, diisobutylaluminum monochloride, ethylaluminum sesquichloride, ethylaluminum dichloride, and the like; (c) dialkylaluminum hydrides such as diethylaluminum hydride, diisobutylaluminum hydride and the like; (d) aluminum alkoxides such as diethylaluminum ethoxide, diethylaluminum phenoxide, and the like.

The organoaluminum compounds of (a) to (c) can be used in combination with alkylaluminum alkoxides, such as, for example, alkylaluminum alkoxides represented by the formula: $R^{10}{}_{3-a}Al(OR^{11})_a$ (wherein $1 \leqq a \leqq$

3, $R^{10}$ and $R^{11}$, which may be either the same or different, are each hydrocarbyl groups having about 1 to 10 carbon atoms). For example, there may be included combinations of triethylaluminum with diethylaluminum ethoxide; of diethylaluminum monochloride with diethylaluminum ethoxide; of ethylaluminum dichloride with ethylaluminum diethoxide; and of triethylaluminum, diethylaluminum ethoxide and diethylaluminum chloride.

The amount of the component (B) used may be 0.1 to 1000, preferably 1 to 100, in terms of weight ratio of the component (B)/component (A).

Component (C)

The component (C) to be used optionally as the additional component in the polymerization step (2) in the present invention is a boron compound having a bond of the formula B-$OR^5$ (wherein $R^5$ is a hydrocarbyl group) and/or a silicon compound represented by the formula: $R^5_yX_zSi(OR^6)_{4-y-z}$ (wherein $R^5$ and $R^6$ are each hydrocarbyl groups, X is a halogen atom, y and z are respectively $0 \leqq y \leqq 3$ and $0 \leqq z \leqq 3$, and yet $0 \leqq (y + z) \leqq 3$). When the Component (C) is used, the resultant product polymer will have improved powder characteristics in such as bulk density, flowing speed which will be explained hereinbelow, and the like.

In the boron compound having a bond of the formula B-$OR^5$, $R^5$ is an aliphatic or aromatic hydrocarbyl group having about 1 to 20, preferably about 1 to 8 carbon atoms. The balance of the valence of boron is preferably satisfied with the same or different $OR^5$ group, an alkyl group (preferably about $C_1$ to $C_{10}$), a halogen atom (preferably chlorine), or a cyclic hydrocarbyl group of about $C_6$ to $C_{10}$.

Specific examples of such boron compounds may include:

$B(OCH_3)_3$,
$B(OC_2H_5)_3$,
$B(OC_3H_7)_3$,
$B(OiC_3H_7)_3$,
$B(O\text{-}nC_4H_9)_3$,
$B(OC_6H_{13})_3$,
$B(OC_6H_5)_3$,
$B(OC_6H_4(CH_3))_3$,
$B(OC_2H_5)Cl$,
$B(OCH_3)_2Cl$,
$(C_2H_5)B(OC_2H_5)_2$,
$B(C_6H_5)(OCH_3)_2$,
$B(OC_4H_9)Cl_2$, and the like.

Among them, preferable are $B(OCH_3)_3$, $B(OC_2H_5)_3$ and $B(O\text{-}nC_4H_9)_3$.

In the silicon compound represented by the above formula $R^5_yX_zSi(OR^6)_{4-y-z}$, $R^5$ and $R^6$ may be each preferably a hydrocarbyl group having about 1 to 20, preferably 1 to 10 carbon atoms. X is preferably chlorine, at least in view of economy.

Specific examples may include:

$(CH_3)Si(OCH_3)_3$,
$(CH_3)Si(OC_2H_5)_3$,
$(C_2H_5)_2Si(OCH_3)_2$,
$(n\text{-}C_6H_{11})Si(OCH_3)_3$,
$(C_2H_5)Si(OC_2H_5)_3$,
$(n\text{-}C_{10}H_{21})Si(OC_2H_5)_3$,
$(CH_2=CH)Si(OCH_3)_3$,
$Cl(CH_2)_3Si(OCH_3)_3$,
$Si(OCH_3)_4$,
$Si(OC_2H_5)_3Cl$,
$(C_2H_5)_2Si(OC_2H_5)_2$,
$(C_{17}H_{35})Si(OCH_3)_3$,
$Si(OC_2H_5)_4$,
$(C_6H_5)Si(OCH_3)_3$,
$Si(OCH_3)_2Cl_2$,
$(C_6H_5)_2Si(OCH_3)_2$,
$(CH_3)_2Si(OCH_3)_2$,
$(CH_3)_3Si(OCH_3)$,

$(C_2H_5)_2Si(OC_2H_5)_2$,
$(n\text{-}C_3H_7)_2Si(OCH_3)_2$,
$(i\text{-}C_3H_7)_2Si(OC_2H_5)_2$,
$(n\text{-}C_4H_9)_2Si(OCH_3)_2$,
$(C_6H_5)(CH_3)Si(OCH_3)_2$,
$(C_6H_5)Si(OC_2H_5)_3$,
$(C_6H_5)_2Si(OC_2H_5)_2$,
$NC(CH_2)_2Si(OC_2H_5)_3$,
$(C_6H_5)(CH_3)Si(OC_2H_5)_2$,
$(n\text{-}C_3H_7)Si(OC_2H_5)_3$,
$(CH_3)Si(OC_3H_7)_3$,
$(C_6H_5)(CH_2)Si(OC_2H_5)_3$,
$(CH_3)_3CSi(CH_3)(OCH_3)_2$,
$(CH_3)_3CSi(HC(CH_3)_2)(OCH_3)_2$,
$(CH_3)_3CSi(CH_3)(OC_2H_5)_2$,
$(C_2H_5)_3CSi(CH_3)(OCH_3)_2$,
$(CH_3)(C_2H_5)CH\text{-}Si(CH_3)(OCH_3)_2$,
$((CH_3)_2CHCH_2)Si(OCH_3)_2$,
$(C_2H_5C(CH_3)_2Si(CH_3)(OCH_3)_2$,
$(C_2H_5C(CH_3)_2Si(CH_3)(OC_2H_5)_2$,
$(CH_3)_3CSi(OCH_3)_3$,
$(CH_3)_3CSi(OC_2H_5)_3$,
$(C_2H_5)_3CSi(OC_2H_5)_3$,
$(CH_3)(C_2H_5)CHSi(OCH_3)_3$, and the like.

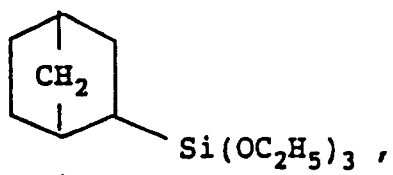

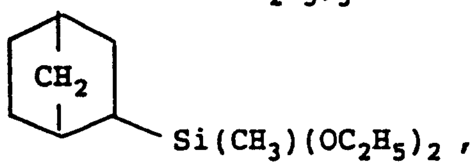

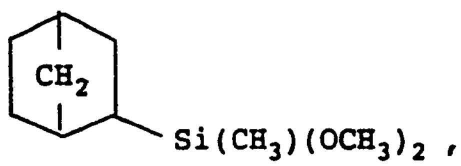

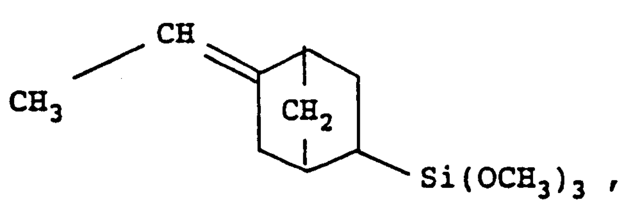

Preferable among these are silicon compounds wherein $R^5$ and $R^6$ are each lower linear hydrocarbyl groups.

As such preferably silicon compounds, there may be included:
$(CH_3)Si(OCH_3)_3$,
$(CH_3)_2Si(OCH_3)_2$,
$(C_2H_5)Si(OCH_3)_3$,
$(C_2H_5)Si(OC_2H_5)_3$,
$(C_2H_5)_2Si(OC_2H_5)_2$,
$Si(OCH_3)_4$,

$Si(OC_2H_5)_4$,
$(C_2H_5)Si(OC_2H_5)_3$, and the like.

The amount of the component (C) used may be within the range of 0.1 to 40, preferably 1 to 20, in terms of molar ratio relative to the titanium constituting the component (A).

Polymerization steps

The polymerization steps which are carried out in the presence of the above catalyst components comprise at least the two stages of the step (1) and the step (2). Either the step (1) or the step (2) may be carried first, but it is industrially advantageous to practice them in the order of (1) → (2) for adding the component (C).

Formation of the catalyst

The catalyst of the present invention is formed by contacting at once or stepwise the above catalyst components (A) and (B) (or the catalyst components (A), (B) and (C)) in the polymerization system or outside the polymerization system (the component (C) is within the polymerisation system).

Polymerization step (1)

The polymerization step (1) is a step in which propylene alone or a propylene/ethylene mixture is fed into a polymerization system having the above catalyst components (A) and (B) to carry out polymerization in one stage or multiple stages to form a propylene homopolymer or a propylene-ethylene copolymer with an ethylene content of 7% by weight or less, preferably 0.5% by weight or less, in an amount corresponding to 10 to 90% by weight, preferably 20 to 80 by weight, more preferably 30 to 70% by weight, most preferably 50 to 65% by weight, of the total weight of the final polymer to be produced in the polymerization steps (1) and (2).

If the ethylene content in the propylene-ethylene copolymer exceeds 7% by weight produced in the polymerization step (1), the bulk density of the final polymer is lowered and the amount of the low crystalline polymer produced as a by-product is increased to great extent. On the other hand, if the polymerization quantity is less than the lower limit of the above range, the amount of a by-product of low crystalline polymers is also increased.

The polymerization temperature in the polymerization step (1) may be 30 to 95 °C, preferably about 50 to 85 °C, and the polymerization pressure is generally within the range of 1 to 50 $kg/cm^2G$. In the polymerization step (1), it is preferable to control an MFR of the polymer produced in the step with the use of a molecular weight controling aid such as hydrogen, and the like thereby to produce the final polymer endowed with higher flowability.

Polymerization step (2)

The polymerization step (2) is a step in which a propylene/ethylene mixture is polymerized in one stage or multiple stages to form a rubbery copolymer of propylene with a polymerization ratio (weight ratio) of propylene/ethylene of 90/10 to 10/90, preferably 70/30 to 30/70, wherein the polymerization quantity in this step comprises 90 to 10% by weight, preferably 80 to 20 by weight, more preferably 70 to 30% by weight, most preferably 50 to 35% by weight, of the quantity of the final polymer.

In this polymerization step (2), further comonomer can additionally be used. For example, an $\alpha$-olefin such as 1-butene, 1-pentene, 1-hexene, or the like can be additionally used.

The polymerization temperature in the polymerization step (2) may be about 30 to 90 °C, preferably 50 to 80 °C. The polymerization pressure typically used may be within the range of 1 to 50 $kg/cm^2G$.

In transferring from the polymerization step (1) to the polymerization step (2), it is preferable to purge propylene gas or propylene/ethylene gas mixture and hydrogen gas from the process product of the step (1) before its transfer to the subsequent step.

In the polymerization step (2), the molecular weight controling agent may be either used or not depending on the purpose.

The timing when the boron compound and/or the silicon compound of the component (C) which is an optional component is added can be at any desired time, but preferably at initiation of the polymerization step (2).

Polymerization mode

The process for producing the copolymer according to the present invention can be practiced according to any of the batch-wise mode, the continuous mode and the semibatch-wise mode. These polymerization modes may be practiced by a method in which polymerization is carried with the monomer used itself as a polymerization medium or dispersant, a method in which polymerization is carried out in gaseous monomers without use of any polymerization medium added, or a method in which polymerization is carried out in combination of these.

A preferable polymerization method is such that polymerization is carried out in gaseous monomers without use of a polymerization medium, e.g. such that a fluidized bed of the polymer particles formed is formed by the monomer gas stream or that the polymers formed is stirred by a stirrer in a reaction tank.

Copolymer of propylene block copolymer formed

The propylene copolymer to be produced upon carrying out polymerization substantially in the absence of a solvent or a polymerization medium according to the present invention contains a rubbery copolymer of propylene of 20 to 70% by weight, preferably 35 to 60% by weight. Here, "rubbery copolymer of propylene" refers to xylene soluble components at 20 °C.

The present invention is of a process for producing propylene block copolymers. However, the "block copolymer" as herein mentioned does not necessarily mean the ideal form, namely one having the block formed in the step (1) and the block formed in the step (2) existing on one molecular chain, but is inclusive, as conventionally used, of mechanical mixtures of the polymers formed in the respective steps and polymers of various forms between such mixtures and the above ideal block copolymer.

[EXPERIMENTAL EXAMPLES]

Example A-1

[Preparation of component (A)]

Into a flask thoroughly replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask thoroughly replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.8 mol of $SiCl_4$ was introduced into the flask at 30 °C over 30 minutes, and the reaction was carried out at 90 °C for one hour. After completion of the reaction, the product was washed with n-heptane.

Into a flask amply replaced with nitrogen was introduced 50 ml of amply purified n-heptane, and then 5 g of the solid component obtained above was introduced. Next, 2.4 ml of $(CH_3)_3CSi(CH_3)(OCH_3)_2$ as the silicon compound of the component (ii), 5.8 ml of $SiCl_4$ of the component (iii), and further 6.0 g of triethylaluminum of the component (iv) were respectively introduced and contacted at 30 °C for 2 hours. After completion of the contact, the product was amply washed with n-heptane to provide a component (A).

[Copolymerization of propylene]

According to the process disclosed in Japanese Patent Publication No. 33721/1986, copolymerization of propylene was carried out wherein a horizontal biaxial gas phase polymerization vessel of 13-liter volume was used.

After replacement of the polymerization vessel with thoroughly purified nitrogen, 400 g of an amply dehydrated and deoxygenated polymer carrier was added. Subsequently, 500 mg of triethylaluminum of the component (B) and 120 mg of the above synthesized component (A) were introduced. In the polymerization step (1) of the first stage, after introduction of 1000 ml of hydrogen, at a temperature controlled to 75 °C, propylene was introduced at a constant rate of 1.3 g/min. The stirring rotation of the polymerization vessel was 350 r.p.m. The polymerisation temperature was maintained at 75 °C and, after 3 hours and 30 minutes, introduction of propylene was stopped. Polymerization was continued at 75 °C, and when the polymerization

pressure became 1 $Kg/cm^2G$, a small amount of the polymer sample was collected.

Then, 500 ml of $H_2$ was added to initiate the polymerization step (2). The second stage polymerization was carried out by introducing 0.59 g/min. of propylene and 0.40 g/min. of ethylene respectively at constant rates at 70 °C for one hour and 50 minutes. Introduction of propylene and ethylene was stopped, and polymerization under the residual pressure was carried out until the polymerization pressure became 1 $Kg/cm^2G$. After completion of polymerization, the polymer was taken out after purging the process product to give 383 g of a polymer. The polymer formed had an MFR of 7.7 g/10 min., a polymer bulk density (B.D.) of 0.49 g/cc, and a polymer falling speed of 4.3 sec. The weight of the rubbery copolymer was 29.8% by weight.

There was no polymer adherence in the polymerization vessel at all, and the intermediate sample had an MFR of 17.4 g/10 min.

The "polymer falling speed" means the time required for falling of 50 g of the polymer. The rubbery copolymer weight means the weight of xylene soluble components at 20 °C.

Example A-2

[Synthesis of catalyst component (A)]

In entirely the same manner as in Example A-1, contact between the components (i)-(iv) was effected, and then 3.5 ml of 1,5-hexadiene was added to carry out the reaction at 30 °C for 2 hours. After completion of the reaction, the product was washed with heptane to provide a catalyst component (A).

[Copolymerisation of propylene]

In the polymerization conditions in Example A-1, the polymerization time in the polymerization step (1) was changed to 3 hours and 10 minutes, and the polymerization time in the polymerization step (2) to 2 hours and 15 minutes, and following otherwise the same procedure, polymerization was carried out. An amount of 381 g of a polymer was obtained, with MFR = 7.5 g/10 min., polymer B.D. = 0.48 g/cc and polymer falling speed = 4.3 sec. The weight of the rubbery copolymer was 34.2% by weight.

Example A-3

[Synthesis of component (A)]

In entirely the same manner as in Example A-1, contact of the components (i)-(iv) was effected, followed by washing with heptane, to give a solid component. Subsequently, with addition of 1.5 g of styrene, the reaction was carried out at 30 °C for 2 hours, and after completion of the reaction, the product was washed with heptane to give a catalyst component (A).

[Copolymerization of propylene]

In the polymerization conditions in Example A-1, the polymerization time in the polymerization step (1) was changed to 2 hours and 56 minutes, and the polymerization time in the polymerization step (2) to 2 hours and 33 minutes, and following otherwise the same procedure, polymerization was carried out. An amount of 384 g of a polymer was obtained, with MFR = 7.1 g/10 min., polymer B.D. = 0.46 g/cc and polymer falling speed = 4.7 sec. The weight of the rubbery copolymer was 38.8% by weight.

Example A-4

[Synthesis of component (A)]

In synthesis of the component (A) in Example A-1, the amount of $(CH_3)_3CSi(CH_3)(OCH_3)_2$ of the component (ii) used was changed to 3.2 ml, the amount of $SiCl_4$ of component (iii) used was changed to 11.6 ml, and following otherwise the same procedure, synthesis was carried out. Subsequently, with addition of 5.0 g of styrene, the reaction was carried out at 35 °C for 2 hours, and after completion of the reaction, the product was washed with heptane to provide a catalyst component (A).

[Copolymerization of propylene]

In the polymerization conditions in Example A-1, the polymerization time in the polymerization step (1) was changed to 1 hour and 58 minutes, and the polymerization time in the polymerization step (2) to 3 hours and 49 minutes, 77 mg of $B(OCH_3)_3$ was added at the initiation of the polymerization step (2), and following otherwise the same procedure, polymerization was carried out. An amount of 381 g of a polymer was obtained, with MFR = 6.2 g/10 min., polymer B.D. = 0.47 g/cc and polymer falling speed = 4.5 sec. The weight of the rubbery copolymer was 58.8% by weight.

Example A-5

The procedure set forth in Example A-1 for producing the Component (A) and for polymerizing propylene was followed except for using no $SiCl_4$ as the Component (iii).

As the result, 380 g of a polymer was obtained, with MFR = 7.9 g/10 min., polymer B. D. = 0.48 g/cc, polymer falling speed = 4.3 seconds, and weight of the rubbery copolymer = 29.6 % by weight.

No adherence of a polymer in the polymerization vessel was observed.

Example B-1

[Preparation of component (A)]

Into a flask amply replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask amply replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30 °C over 30 minutes, and the reaction was carried out at 70 °C for 3 hours. After completion of the reaction, the product was washed with n-heptane. Then, a mixture of 25 ml of n-heptane with 0.024 mol of phthalic chloride was introduced at 70 °C over 30 minutes into a flask and the reaction was carried out at 90 °C for one hour.

After completion of the reaction, the product was washed with n-heptane. Subsequently, 20 ml of $SiCl_4$ was introduced, and the reaction was carried out at 80 °C for 6 hours. After completion of the reaction, the product was washed amply with n-heptane. This product had a titanium content of 1.21% by weight.

Into a flask amply replaced in it with nitrogen was introduced 50 ml of amply purified n-heptane, and then 5 g of the solid component obtained above was introduced. Next, 5 g of the component (i) obtained above, then 3.5 g of 1,5-hexadiene of the component (v), then 1.6 ml of $(CH_3)_3CSi(CH_3)(OCH_3)_2$ as the silicon compound of the component (ii), 0.52 ml of $TiCl_4$ of the component (iii), and further 3.0 g of triethylaluminum of the component (iv) were respectively introduced and contacted at 30 °C for 2 hours. After completion of the contact, the product was amply washed with n-heptane to provide a component (A).

[Copolymerization of propylene]

According to the process disclosed in Japanese Patent Publication No. 33721/1986, copolymerization of propylene was carried out wherein a horizontal biaxial gas phase polymerization vessel of 13-liter volume was used.

After replacement of the polymerization vessel in it with amply purified nitrogen, 400 g of an amply dehydrated and deoxygenated polymer carrier was added. Subsequently, 500 mg of triethylaluminum of the component (B) and 100 mg of the above synthesized component (A) were introduced. In the polymerization step (1), after introduction of 1000 ml of hydrogen, at a temperature controlled to 75 °C, propylene was introduced at a constant rate of 1.3 g/min. The stirring rotation of the polymerization vessel was 350 r.p.m. The polymerization temperature was maintained at 75 °C and, after 2 hours and 42 minutes, introduction of propylene was stopped. Polymerization was continued at 75 °C, and when the polymerization pressure became 1 $Kg/cm^2G$, a small amount of the polymer sample was collected.

Then, 91 mg of $B(OCH_3)_3$ was added to initiate the second stage polymerization. The molar ratio of the component (C) to the titanium component in the component (A) was B/Ti = 7.5. The second stage

polymerization (the polymerization step (2)) was carried out by introducing 0.59 g/min. of propylene and 0.40 g/min. of ethylene respectively at constant rates at 70 °C for 2 hours and 52 minutes. Introduction of propylene and ethylene was stopped, and polymerization under the residual pressure was carried put until the polymerization pressure became 1 $Kg/cm^2G$. After completion of polymerization, the polymer was taken out after purging to give 373 g of a polymer. The polymer formed had a MFR of 5.5 g/10 min., a polymer bulk density (B.D.) of 0.45 g/cc, and a polymer falling speed of 5.1 sec. The weight of the rubbery copolymer was 43.2% by weight.

There was no polymer adherence in the polymerization vessel at all, and the intermediate sample had a MFR of 17.1 g/10 min.

Example B-2

With use of the catalyst used in Example B-1, copolymerization of propylene was carried out. However, the polymerization time in the first step was changed to 147 minutes, the polymerization time in the second step for the rubbery portion to 191 minutes, and the amount of $B(OCH_3)_3$ of the component (C) to 114 mg, and following otherwise entirely the same procedure, polymerization was carried out. B/Ti was equal to 10 (molar ratio). An amount of 374 g of a polymer was obtained, with MFR = 17.4 g/10 min., B.D. = 0.40 g/cc, a polymer falling speed of 5.3 sec. and a weight of the rubbery copolymer of 48.3% by weight. The intermediate sample had MFR = 17.3 g/10 min.

Examples B-3 - 7

Copolymerization of propylene was carried out in entirely the same manner as in Example B-1 except for the change in the type and the amount of the component (C) as shown in Table 1. The results are shown in Table 1.

Table-1

| Example No. | Component (v) (amount used) | Component (C) (molar ratio to Ti) | Polymer yield (g) | MFR (g/10 min.) | | Polymer B.D. (g/cc) | Falling speed (sec.) |
|---|---|---|---|---|---|---|---|
| | | | | Inter-mediate sample | Product | | |
| B-3 | 1,5-Hexadiene (4.0 g) | $B(OC_2H_5)_3$ (12.5) | 374 | 17.6 | 6.1 | 0.41 | 5.7 |
| B-4 | 1,3-Butadiene (3.2 g) | $B(OnC_4H_9)_3$ (15) | 372 | 17.1 | 6.2 | 0.40 | 5.9 |
| B-5 | 1,4-Hexadiene (5.0 g) | $B(OCH_3)_3$ (10) | 381 | 17.5 | 5.9 | 0.40 | 5.8 |
| B-6 | 5-Methyl-1,4-hexadiene (5.0 g) | $B(OCH_3)_3$ (12.5) | 372 | 16.9 | 5.3 | 0.42 | 5.6 |
| B-7 | 1,3-Cyclohexadiene (3.0 g) | $B(OCH_3)_3$ (10) | 375 | 17.0 | 6.3 | 0.39 | 6.0 |

Example B-8

[Preparation of component (A)]

In preparating the catalyst (A) in Example B-1, 5.0 g of dicyclopentadiene was used in place of 1-hexene of the component (v), 0.44 ml of $SiCl_4$ in place of 0.52 ml of $TiCl_4$ of the component (iii), 4.8 g of trihexylaluminum in place of triethylaluminum, and otherwise preparation was carried out in entirely the same manner to provide a component (A).

[Copolymerization of propylene]

In polymerization of the second stage polymerization conditions in Example B-1, polymerization was carried out in entirely the same manner except for the changes in the amount Of propylene introduced to 0.40 g/min. and the amount of ethylene introduced to 0.60 g/min.

An amount of 369 g of a polymer was obtained with MFR = 5.9 g/10 min., B.D. = 0.41 g/cc, a polymer falling rate = 5.7 sec. The weight of the rubbery copolymer was 43.6% by weight.

Comparative example B-1

Polymerization in Example B-1 was repeated except that no $B(OCH_3)_3$ of the component (C) was used at all. An amount of 377 g of a polymer was obtained with MFR = 8.9 g/10 min., B.D. = 0.24 g/cc, a polymer falling speed being immeasurable. The weight of the rubbery copolymer was 44.2% by weight, and a large amount of polymer adherents was observed in the polymerization vessel.

Comparative example B-2

In preparating the component (A) in Example B-1, the component (A) was prepared in entirely the same manner except for using no 1,5-hexadiene of the component (v). Also, polymerization in B-1 was repeated except that no $B(OCH_3)_3$ of the component (C) was used at all. An amount of 383 grams of a polymer was obtained with MFR = 10.8 g/10 min., B.D. = 0.20 g/cc.

The polymer falling speed was immeasurable (the polymer not fallen), with the weight of the rubbery copolymer being 44.1% by weight, and a large amount of polymer was observed to adhere in the polymerization vessel.

Comparative example B-3

In preparating the component (A) in Example B-1, the component (A) was prepared in entirely the same manner except for using no 1,5-hexadiene of the component (V). The polymerization was carried out in entirely the same manner except for the changes the component (A) obtained above. An amount of 377 g of a polymer was obtained with MFER = 8.5 g/10 min., B. D. = 0.27 g/cc, a polymer falling speed being immeasurable.

Examples B-9 and 10

The procedure set forth in Example B-1 for producing the Component (A) and polymerizing propylene was followed except for the use of 4.5 g of diethylzinc or 3.6 g of ethylbutylmagnesium in place of triethylaluminium as the component (iv) for producing the Component (A).

The results obtained are set forth in Table-2.

Table-2

| Example No. | Component (v) (g) | Polymer yield (g) | MFR (g/10 min.) Inter-mediate sample | MFR (g/10 min.) Product | Polymer B.D. (g/cc) | Falling speed (sec.) |
|---|---|---|---|---|---|---|
| B-9 | $Zn(C_2H_5)_2$ (4.5 g) | 371 | 16.9 | 5.2 | 0.44 | 5.2 |
| B-10 | $MgC_2H_5 \cdot C_4H_9$ (3.6 g) | 370 | 17.0 | 5.3 | 0.43 | 5.1 |

Example C-1

[Preparation of component (A)]

Into a flask amply replaced in it with nitrogen was introduced 200 ml of dehydrated and deoxygenated n-heptane, and-Subsequently 0.4 mol of $MgCl_2$ and 0.8 mol of $Ti(O\text{-}nC_4H_9)_4$ and the reaction was carried out at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask amply replaced in it with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30 °C over 30 minutes, and the reaction was carried out at 70 °C for 3 hours. After completion of the reaction, the product was washed with n-heptane. Then, a mixture of 25 ml of n-heptane with 0.024 mol of phthalic chloride was introduced at 70 °C over 30 minutes into a flask and the reaction was carried out at 90 °C for one hour.

After completion of the reaction, the product was washed with n-heptane. Subsequently, 20 ml of $SiCl_4$ was introduced, and the reaction was carried out at 80 °C for 6 hours. After completion of the reaction, the product was washed amply with n-heptane. This product had a titanium content of 1.21% by weight.

Into a flask amply replaced in it with nitrogen was introduced 50 ml of amply purified n-heptane, and then 5 g of the component (i) obtained above was introduced. Next, 2.8 ml of 1-hexene of the component (v), then 1.6 ml of $(CH_3)_3CSi(CH_3)(OCH_3)_2$ as the silicon compound of the component (ii), 0.52 ml of $TiCl_4$ of the component (iii), and further 3.0 g of triethylaluminum of the component (iv) were respectively introduced and contacted at 30 °C for 2 hours. After completion of the contact, the product was thoroughly washed with n-heptane to provide a component (A).

[Copolymerization of propylene]

According to the process disclosed in Japanese Patent Publication No. 33721/1986, copolymerization of propylene was carried out wherein a horizontal biaxial gas phase polymerization vessel of 13-liter volume was used.

After replacement of the polymerization vessel inside with amply purified nitrogen, 400 g of an amply dehydrated and deoxygenated polymer carrier was added. Subsequently, 500 mg of triethylaluminum of the component (B) and 100 mg of the above synthesized component (A) were introduced. In the polymerization step (1), after introduction of 1000 ml of hydrogen, at a temperature controlled to 75 °C, propylene was introduced at a constant rate of 1.3 g/min. The stirring rotation of the polymerization vessel was 350 r.p.m. The polymerization temperature was maintained at 75 °C and, after 3 hours and 10 minutes, introduction of propylene was stopped. Polymerization was continued at 75 °C, and when the polymerization pressure became 1 $Kg/cm^2G$, a small amount of the polymer sample was collected.

Then, 114 mg of $B(OCH_3)_3$ was added to initiate the second stage polymerization. The molar ratio of the component (C) to the titanium component in the component (A) was B/Ti = 10. The second stage polymerisation (the polymerization step (2)) was carried out by introducing 0.59 g/min. of propylene and 0.40 g/min. of ethylene respectively at constant rates at 70 °C for 2 hours and 15 minutes. Introduction of propylene and ethylene was stopped, and polymerization under the residual pressure was carried out until the polymerization pressure became 1 $Kg/cm^2G$. After completion of polymerization, the polymer was taken out after purging to give 371 g of a polymer. The polymer formed had a MFR of 7.8 g/10 min., a polymer bulk density (B.D.) of 0.45 g/cc, and a polymer falling speed of 5.1 sec. The weight of the rubbery copolymer was 35.1% by weight.

The intermediate sample had a MFR of 17.1 g/10 min., and there was no polymer adherence found in the polymerization vessel.

Example C-2

By use of the catalyst used in Example C-1, copolymerization of propylene was carried out. However, the polymerization time in the first step was changed to 162 minutes, the polymerization time in the second step for the rubbery portion to 172 minutes, and the amount of $B(OCH_3)_3$ of the component (C) to 143 mg, and following otherwise entirely the same procedure, polymerization was carried out. B/Ti was equal to 12.5 (molar ratio). An amount of 370 g of a polymer was obtained, with MFR = 8.2 g/10 min., B.D. = 0.41 g/cc, a polymer falling speed of 7.3 sec. and a weight of the rubbery copolymer of 41.5% by weight. The intermediate sample had a MFR = 17.3 g/10 min.

Examples C-3 - 5

Copolymerization of propylene was carried out in entirely the same manner as in Example C-1 except for the change in the type and the amount of the component (C) as shown in Table 3. The results are shown in Table 3.

Example C-6

[Preparation of component (A)]

In preparation of the catalyst (A) in Example C-1, 2.5 g of 1-decene was used in place of 1-hexene of the component (v), 0.44 ml of $SiCl_4$ in place of 0.52 ml of $TiCl_4$ of the component (iii), 4.8 g of trihexylaluminum in place of triethylaluminum, and otherwise preparation was carried out in entirely the same manner to provide a component (A).

[Copolymerization of propylene]

In polymerization of the second stage polymerization conditions in Example C-1, polymerization was carried out in entirely the same manner except for the changes in the amount of propylene introduced to 0.40 g/min. and the amount of ethylene introduced to 0.60 g/min.

An amount of 368 g of a polymer was obtained with MFR = 7.9 g/10 min., B.D. = 0.44 g/cc, polymer falling speed = 5.2 sec. The weight of the rubbery copolymer was 34.5% by weight.

Comparative example C-1

Polymerization in Example C-1 was repeated except that no $B(OCH_3)_3$ of the component (C) was used at all. An amount of 381 g of a polymer was obtained with MFR = 8.6 g/10 min., B.D. = 0.30 g/cc, polymer falling speed = 47 sec. The weight of the rubbery copolymer was 35.1% by weight, and a large amount of adherents was observed in the polymerization vessel.

Comparative example C-2

In preparating the component (A) in Example C-1, the component (A) was prepared in entirely the same manner except for using no 1-hexene of the component (v). Also, polymerization in Example B-1 was repeated except that no $B(OCH_3)_3$ of the component (C) was used at all. An amount of 382 g of a polymer was obtained with MFR = 8.8 g/10 min., B.D. = 0.25 g/cc.

The polymer falling speed was immeasurable (polymer nob fallen), with the weight of the rubbery copolymer being 34.7% by weight, and a large amount of polymer was observed to be adhered in the polymerization vessel.

Table-3

| Example No. | Component (v) (g) | Polymer yield (g) | MFR (g/10 min.) | | Polymer B.D. (g/cc) | Falling speed (sec.) |
|---|---|---|---|---|---|---|
| | | | Inter-mediate sample | Product | | |
| C-3 | $B(OC_2H_5)_3$ (15) | 377 | 8.3 | 0.42 | 0.42 | 5.9 |
| C-4 | $B(OnC_4H_9)_3$ (20) | 375 | 17.2 | 9.5 | 0.41 | 6.0 |
| C-5 | $B(OC_6H_5)_3$ (10) | 371 | 17.8 | 8.9 | 0.40 | 6.5 |

Example D-1

[Preparation of component (A)]

Into a flask amply replaced in it with nitrogen was introduced 200 ml of dehydrated and deoxygenated n-heptane, and subsequently 0.4 mol of $MgCl_2$ and 0.8 mol of $Ti(O\text{-}nC_4H_9)_4$ and the reaction was carried at 95 °C for 2 hours. After completion of the reaction, the temperature was lowered to 40 °C, followed by addition of 48 ml of methylhydropolysiloxane (of 20 centistokes) and the reaction was carried out for 3 hours. The solid component formed was washed with n-heptane.

Subsequently into a flask amply replaced with nitrogen was introduced 50 ml of n-heptane purified similarly as described above, and the solid component synthesized above was introduced in an amount of 0.24 mol as calculated on Mg atom. Then, a mixture of 25 ml of n-heptane with 0.4 mol of $SiCl_4$ was introduced into the flask at 30°C over 30 minutes, and the reaction was carried out at 70°C for 3 hours. After completion of the reaction, the product was washed with n-heptane. Then, a mixture of 25 ml of n-heptane with 0.024 mol of phthalic chloride was introduced at 70°C over 30 minutes into a flask and the reaction was carried out at 90°C for one hour.

After completion of the reaction, the product was washed with n-heptane. Subsequently, 20 ml of $SiCl_4$ was introduced, and the reaction was carried out at 80°C for 6 hours. After completion of the reaction, the product was washed amply with n-heptane. This product had a titanium content of 1.21% by weight.

Into a flask amply replaced in it with nitrogen was introduced 50 ml of amply purified n-heptane, and then 5 g of the solid component (i) obtained above was introduced. Next, 2.8 ml of 1-hexene of the component (v), then 1.6 ml of $(CH_3)_3CSi(CH_3)(OCH_3)_2$ as the silicon compound of the component (ii), 0.52 ml of $TiCl_4$ of the component (iii), and further 3.0 g of triethylaluminum of the component (iv) were respectively introduced and contacted at 30°C for 2 hours. After completion of the contact, the product was amply washed with n-heptane to provide a component (A).

[Copolymerization of propylene]

According to the process disclosed in Japanese Patent Publication No. 33721/1986, copolymerization of propylene was carried out wherein a horizontal biaxial gas phase polymerization tank of 13-liter volume was used.

After replacement of the polymerization vessel inside with amply purified nitrogen, 400 g of an amply dehydrated and deoxygenated polymer carrier was added. Subsequently 500 mg of triethylaluminum of the component (B) and 100 mg of the above synthesized-component (A) were introduced. In the first stage polymerization (polymerization step (1)), after introduction of 1000 ml of hydrogen, at a temperature controlled to 75°C, propylene was introduced at a constant rate of 1.3 g/min. The stirring rotation of the polymerization vessel was 350 r.p.m. The polymerization temperature was maintained at 75°C and, after 3 hours and 30 minutes, introduction of propylene was stopped. Polymerization was continued at 75°C, and when the polymerization pressure became 1 $Kg/cm^2G$, a small amount of the polymer sample was collected.

Then, 105 mg of $(CH_3)_2Si(OCH_3)_2$ was added to initiate the second stage polymerization. The second stage polymerization (the polymerization step (2)) was carried out by introducing 0.59 g/min. of propylene and 0.40 g/min. of ethylene respectively at constant rates at 70°C for 1 hour and 50 minutes. Introduction of propylene and ethylene was stopped, and polymerization under the residual pressure was carried out until the polymerization pressure became 1 $Kg/cm^2G$. After completion of polymerization, the polymer was taken out after purging to give 405 g of a polymer. The polymer formed had a MFR of 2.7 g/10 min., a polymer bulk density (B.D.) of 0.45 g/cc, and a polymer falling speed of 5.6 sec. The weight of the rubbery copolymer was 28.8% by weight.

There was no polymer adherence at all, and the intermediate sample had a MFR of 16.8 g/10 min.

Example D-2

By use of the catalyst used in Example D-1, copolymerization of propylene was carried out. However, the polymerization time in the first step was changed to 177 minutes, the polymerization time in the second step for the rubbery portion to 156 minutes, and the amount of $(CH_3)_2Si(OCH_3)_2$ of the component (C) to 158 mg, and following otherwise entirely the same procedure, polymerization was carried out. An amount of 401 g of a polymer was obtained, with MFR = 1.9 g/10 min., B.D. = 0.43 g/cc, a polymer falling speed of 7.8 sec. and a weight of rubbery copolymer of 40.3% by weight. The intermediate sample had a MFR = 17.4 g/10 min.

Examples D-3 - 5

Copolymerization of propylene was carried out in entirely the same manner as in Example D-1 except for the changes in the type and the amount of the component (C) as shown in Table 4. The results are shown in Table 4.

Example D-6

[Preparation of component (A)]

In preparating the catalyst (A) in Example D-1, 2.0 g of 1-butene was used in place of 1-hexene of the component (v), 0.44 ml of $SiCl_4$ in place of 0.52 ml of $TiCl_4$ of the component (iii), 4.8 g of trihexylaluminum in place of triethylaluminum, and otherwise preparation was carried out in entirely the same manner to provide a component (A).

[Copolymerization of propylene]

In polymerization of the second stage polymerization under the conditions in Example D-1, polymerization was carried out in entirely the same manner except for the changes in the amount of propylene introduced to 0.40 g/min. and the amount of ethylene introduced to 0.60 g/min.

An amount of 398 g of a polymer was obtained with MFR = 2.1 g/10 min., B.D. = 0.42 g/cc, polymer falling speed = 6.3 sec. The weight of the rubbery copolymer was 28.2% by weight.

Comparative example D-1

Polymerization in Example D-1 was repeated except that no $(CH_3)_2Si(OCH_3)_2$ of the component (C) was used at all. An amount of 403 g of a polymer was obtained with MFR = 2.9 g/10 min., B.D. = 0.33 g/cc, polymer falling speed = 35 sec. The weight of the rubbery copolymer was 29.2% by weight, and a small amount of adherents was observed in the polymerization tank.

Comparative example D-2

In preparation of the component (A) in Example D-1, the component (A) was prepared in entirely the same manner except for not using 1-hexene of the component (v). Also, polymerization in Example D-1 was repeated except that no $(CH_3)_2Si(OCH_3)_2$ of the component (C) was used at all. An amount of 406 grams of a polymer was obtained with MFR = 2.8 g/10 min., B.D. = 0.27 g/cc.

The polymer falling speed was immeasurable (not fallen), with the weight of the rubbery copolymer being 29.1% by weight, and a large amount of polymer was observed to adhere in the polymerization vessel.

Table-4

| Example No. | Component (C) (molar ratio to component (B)) | Polymer yield (g) | MFR (g/10 min.) | | Polymer B.D. (g/cc) | Falling speed (sec.) |
|---|---|---|---|---|---|---|
| | | | Intermediate sample | Product | | |
| D-3 | $(CH_3)Si(OCH_3)_3$ (0.2) | 399 | 16.6 | 2.8 | 0.43 | 5.9 |
| D-4 | $(C_2H_5)_2Si(OC_2H_5)_2$ (0.2) | 403 | 17.1 | 2.7 | 0.44 | 5.8 |
| D-5 | $Si(OC_2H_5)_4$ (0.25) | 396 | 16.9 | 2.5 | 0.42 | 6.1 |

## Claims

1. A process for producing a propylene block copolymer, which comprises practicing the polymerization step (1), shown below, in the presence of a catalyst consisting essentially of the catalyst components (A) and (B), shown below, substantially in the absence of a solvent and practicing the polymerization step (2), shown below, by continuing the polymerization in the presence of catalyst components (A), (B) and (C), said catalyst component (C), shown below, being present in an amount of 0.1 to 40 in terms of a molar ratio relative to titanium in the component (A), substantially in the absence of a solvent thereby

producing a propylene block copolymer with a content of a rubbery product of 20 to 70% by weight, the rubbery product being xylene soluble at 20°c;

Catalyst

Component (A):

a solid catalyst component, used as such or after having been subjected to preliminary polymerization wherein the solid catalyst component is contacted with an olefin in the presence of an organometallic compound, obtained by contacting the following components (i) to (v):

component (i): a solid component comprising titanium, magnesium and halogen as the essential components;

component (ii): a silicon compound represented by the formula $R^1_mX_nSi(OR^2)_{4-m-n}$ wherein $R^1$ and $R^2$ are each hydrocarbyl groups, X is a halogen atom, m and n are, respectively, numbers satisfying equations $0 \leqq m \leqq 3$ and $0 \leqq n \leqq 3$, and yet $0 \leqq (m + n) \leqq 3$;

component (iii): a titanium compound represented by the formula $Ti(OR^3)_{4-a}X_a$ wherein $R^3$ is a hydrocarbyl group, X is a halogen atom, and a is a number satisfying an equation $0 < a \leqq 4$ or the formula $Ti(OR')_{3-b}X_b$ wherein R' is a hydrocarbyl group, X is a halogen atom, and b is a number satisfying an equation $0 < b \leqq 3$ and/or a silicon compound represented by the formula $R^4{}_pSiX_{4-p}$ wherein $R^4$ is a hydrocarbyl group, X is a halogen atom, and p is a number satisfying an equation $0 \leqq p < 4$, in an amount of 0 to 100 in terms of atomic ratio of the titanium and/or silicon of the compound (iii) to the titanium component constituting the component (i);

component (iv): an organoaluminum compound; and optionally

component (v): at least one compound selected from the group consisting of styrenes, olefins having 4 to 20 carbon atoms and diene compounds having 4 to 20 carbon atoms, in an amount of 0.1 to 100 in terms of molar ratio relative to the titanium component constituting the component (i);

Component (B):

an organoaluminum compound; and

Component (C):

a boron compound having a bond of the formula $B\text{-}OR^5$ wherein $R^5$ is a hydrocarbyl group and/or a silicon compound selected from silicon compounds represented by the formula $R^5{}_yX_zSi(OR^6)_{4-y-z}$ wherein $R^5$ and $R^6$ are each hydrocarbyl groups, X is a halogen atom, y and z are, respectively, numbers satisfying equations $0 \leqq y \leqq 3$ and $0 \leqq z \leqq 3$, and yet $0 \leqq (y + z) \leqq 3$;

Polymerization steps:

(1) the step of polymerizing propylene or a propylene/ethylene mixture in one stage or multiple stages to form a propylene homopolymer or a propylene-ethylene copolymer with an ethylene content of 7% by weight or less, the amount of a polymer produced in this step corresponding to 20 to 80% by weight of the total amount of the polymers produced;

(2) the step of polymerizing a propylene/ethylene mixture in a weight ratio of propylene/ethylene of 70/30 to 30/70 in one stage or multiple stages to form a rubbery copolymer of propylene, the amount of a polymer produced in this step corresponding to 80 to 20% by weight of the total amount of the polymers produced.

2. The process for producing a propylene block copolymer according to claim 1, wherein the component (i) of the catalyst is a contact product of a magnesium dihalide, a titanium tetraalkoxide and/or its polymer, a polymeric silicon compound having the structure represented by the formula:

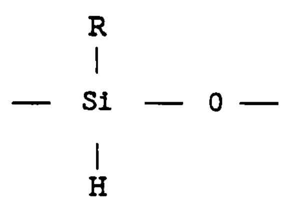

wherein R is a hydrocarbyl group and a titanium halide compound and/or a silicon halide compound.

3. The process for producing a propylene block copolymer according to claim 1 or 2, wherein the component (v) of the catalyst is an olefin having 4 to 20 carbon atoms.

4. The process for producing a propylene block copolymer according to claim 1 or 2, wherein the component (v) of the catalyst is a diene compound having 4 to 20 carbon atoms.

5. The process for producing a propylene block copolymer according to claim 1 or 2, wherein the component (v) of the catalyst is styrene.

6. The process for producing a propylene block copolymer according to any one of the claims 1 to 5 , wherein the component (ii) is a silicon compound having a hydrocarbyl group such that the carbon at the $\alpha$-position of $R^1$ is tertiary and the hydrocarbyl group is a branched hydrocarbyl group having 4 to 10 carbon atoms.

7. The process for producing a propylene block copolymer according to any one of claims 1 to 6, wherein the component (iii) is $TiCl_4$ and/or $SiCl_4$.

8. The process for producing a propylene block copolymer according to any one of claims 1-7, wherein the component (C) is a boron compound selected from the group consisting of $B(OCH_3)_3$.

9. The process for producing a propylene block copolymer according to any one of claims 1-7, wherein the component (C) is a silicon compound having a lower linear hydrocarbyl group.